Europäisches Patentamt

European Patent Office

Office européen des brevets

(19)

(11) Veröffentlichungsnummer: **0 061 009**
**B1**

(12) # EUROPÄISCHE PATENTSCHRIFT

(45) Veröffentlichungstag der Patentschrift:
08.01.86

(21) Anmeldenummer: 82101415.6

(22) Anmeldetag: 25.02.82

(51) Int. Cl.⁴: **F 16 D 51/46,** F 16 D 65/22,
B 60 T 7/10

(54) **Trommelbremse für als Langsamläufer zugelassene Fahrzeuganhänger.**

(30) Priorität: 20.03.81 DE 3110865

(43) Veröffentlichungstag der Anmeldung:
29.09.82 Patentblatt 82/39

(45) Bekanntmachung des Hinweises auf die Patenterteilung:
08.01.86 Patentblatt 86/2

(84) Benannte Vertragsstaaten:
AT DE FR GB IT

(56) Entgegenhaltungen:
DE - A - 2 814 538
DE - C - 441 389
DE - C - 874 861
GB - A - 827 628
US - A - 2 781 868

(73) Patentinhaber: Alois Kober KG, Maschinenfabrik,
Ichenhauserstrasse 14, D-8871 Kötz 2 (DE)

(72) Erfinder: Wöhrle, Rudolf, Ing.grad., Kirchstrasse 2,
D-8873 Ichenhausen-Rieden (DE)
Erfinder: Kober, Kurt, Sandberg 2, D-8871 Kötz 1 (DE)
Erfinder: Köhler, Robert, Ing.grad., Haus-Nr. 126 b,
D-8871 Kemnat (DE)

(74) Vertreter: Ernicke, Hans-Dieter, Dipl.-Ing.,
Schwibbogenplatz 2b, D-8900 Augsburg (DE)

# Beschreibung

Die Erfindung betrifft eine Trommelbremse für als Langsamläufer zugelassene Fahrzeuganhänger, insbesondere landwirtschaftliche Gespanne.

Unter den sogenannten Langsamläufern werden solche Gespanne verstanden, die eine maximal zulässige Geschwindigkeit von 25 km/h aufweisen und deren Anhänger kein höheres Gesamtgewicht als 4 t besitzen dürfen. Solche Gespanne werden vorzugsweise für landwirtschaftliche Zwecke eingesetzt, beispielsweise für Einachs-Anhänger, Ladewagen und dgl. Diese Anhänger werden von Traktoren gezogen.

Bei solchen Gespannen, von denen die Erfindung ausgeht, sind die Anhänger nicht mit Auflaufbremsen, sondern nur mit einer Handbremse ausgerüstet.

Das Fehlen der Auflaufeinrichtung bewirkt zum einen, dass sich die Anhänger vom Zugfahrzeug rückwärts bewegen lassen, ohne dass eine Rückfahrsperre oder eine sich bei Rückwärtsfahrt lösende Bremse vorhanden ist. Zum anderen muss aber mangels Auflaufeinrichtung das Zugfahrzeug den Schub des Anhängers im wesentlichen aufnehmen.

Gesetzlich wird jedoch gefordert, dass eine Handbremseinrichtung vorhanden sein muss, die mindestens 30% Bremsleistung zu erbringen hat. Diese Bremsleistung kann auch im Sinne einer Bremsverzögerung verstanden werden, indem bei Betätigung der Handbremse eine Verzögerung von 3 m/sec² gefordert wird. Gemäss den Vorschriften beträgt die Handbremskraft am Handbremshebel maximal 40 kp.

Die Langsamläufer, von denen die Erfindung ausgeht, sind zur Erfüllung der gesetzlichen Vorschriften mit einer Trommelbremse im Sinne einer Bremsanlage nach dem Oberbegriff des Hauptanspruches ausgerüstet. Die Anhänger weisen Radbremsen mit Bremsbacken auf, die über eine Spreiznockenanordnung betätigt werden, und die sich in beiden Drehrichtungen der Trommel an ortsfesten Anschlägen abstützen. Die Abstützung der Bremsbacken wird daher nicht über eine Servo-Einrichtung übersetzt. Die Trommelbremse weist eine, als Betriebs- und Feststellbremse ausgebildete, als alleiniges Betätigungsmittel wirkende Handbremse auf, deren Handbremshebel am Zugfahrzeug angebracht ist und über ein Gestänge oder einen Bowdenzug die Spreiznockenanordnung betätigt.

Es wurde jedoch beobachtet, dass dieses gesetzlich vorgegebene Ziel bei fabrikneuen Anhängern nach Art von Langsamläufern mit den herkömmlichen Konstruktionen nicht erreichbar ist. Weiterhin wurde die Beobachtung gemacht, dass einige Zeit in Benutzung befindliche Anhänger hinsichtlich ihrer Bremsleistung sich den gesetzlich geforderten Bedingungen nähern. Dies hängt damit zusammen, dass eine Radbremse umso grössere Bremsleistung erzeugt, je mehr sie betätigt, d.h. eingeschliffen ist. Das Risiko liegt also vorwiegend beim Betrieb fabrikneuer Anhänger, deren Radbremsen sich noch nicht eingeschliffen haben.

Die Aufgabe der Erfindung besteht also darin, eine handbetätigte Trommelbremse für als Langsamläufer zugelassene Gespanne zu entwickeln, die schon im noch nicht eingefahrenen Zustand die gesetzlich geforderte Bremsleistung von 30%, bezogen auf die Einwirkung der Handbremse, überschreitet.

Ausgehend von der eingangs beschriebenen, üblichen handbetätigten Trommelbremse für sogenannte Langsamläufer besteht die erfindungsgemässe Lösung der gestellten Aufgabe darin, dass die Spreiznockenanordnung einen mit seiner Antriebswelle ausweichfähig gelagerten Spreiznocken aufweist, dessen Spreizdrehrichtung gleichsinnig mit der Raddrehrichtung bei Vorwärtsfahrt gewählt ist und dass das Verhältnis des Radius des Bremsbelages der Bremsbacken zum Abstand der ortsfesten Anschläge von der Radachse grösser als 1,5 ist.

Der wesentliche Vorteil der Erfindung besteht darin, dass es die konstruktive Abänderung der Trommelbremse ermöglicht, die gesetzlich vorgegebenen Bremsleistungen auch bei fabrikneuen Fahrzeugen und Anhängern zu erreichen oder zu überbieten. Hierbei macht sich die Erfindung die Erkenntnis zunutze, dass die Anlagekraft eines Bremsbackens an der Bremstrommel umso grösser ist, je mehr sich der Abstützanschlag für die Bremsbacke der Radachse nähert. Diese Annäherung ist beim Gegenstand der Erfindung durch die Angabe des Verhältnisses des Radius des Bremsbelages zum Abstand des ortsfesten Anschlages von der Radachse definiert.

Diese vorteilhafte Wirkung wird von der erfindungsgemäss ausgebildeten Spreiznockenanordnung positiv überlagert, wonach ein Spreiznocken vorgesehen ist, dessen Antriebswelle ausweichfähig gelagert ist. Dieser Spreiznocken hat zunächst die Aufgabe, die Bremsbacken an den Anschlägen zur Anlage zu bringen. Sobald die Anlage an den Anschlägen erreicht ist, lassen sich die Bremsbacken in einander entgegengesetzter Richtung nicht mehr verstellen. Bei dieser Ausgangslage hätte an sich eine ausweichfähige Spreiznockenwelle nach herkömmlichen Überlegungen keine Funktion. Der spezielle Gedanke der Erfindung besteht jedoch darin, dass die Spreiznockenwelle wegen der ortsfesten Anschlagstellung der Bremsbacken sich verlagern soll, um auf diese Weise die aus der Anschlagstellung der Sekundärbacke sich ergebende Rückstellkraft über den Ausweichweg der Spreiznockenwelle auf die Primärbacke zu übertragen. Der Ausweichweg der Spreiznockenwelle ist also kein eigentlicher Weg, sondern ein Mittel, um Kräfte übertragen zu können. Folglich kommt es dazu, dass die Abstützkraft des Sekundärbackens sich als kraftüberlagernd an die Andrückkraft des Primärbackens an der Bremstrommel auswirkt.

Diese Wirkung wird noch dadurch gesteigert, dass die Spreizdrehrichtung des Spreiznockens gleichsinnig mit der Raddrehrichtung bei Vorwärtsfahrt gewählt ist.

Gemäss einem Ausführungsbeispiel der Erfindung empfiehlt es sich, die Längsachse des Spreiznockens in der ungespreizten Stellung in einen spitzen Winkel zu der durch die Radachse führenden Radialen einzustellen, dergestalt, dass die der Radachse näherliegende Angriffsfläche des Spreiznockens der Sekundärbacke zugeordnet ist.

Beim Spreizen des Spreiznockens wirkt also das vom Hebelarm herrührende grössere Moment auf den Primärbacken ein. Da aber der Sekundärbacken auch ortsfest abgestützt ist, ergibt sich aus dem Stützmoment des Sekundärbackens und der eingangs erwähnten Drehrichtung des Spreiznockens eine Zusatzkraft, die zur Verstärkung der Anpresskraft des Primärbackens an der Bremstrommel führt. Diese Kraftverstärkung unterscheidet sich von derjenigen einer Servo-Bremse, bei der über die bewegliche Abstützung der Primärbacken die Anpresskraft des Sekundärbackens verstärkt.

Aus der DE-OS 2 814 538 ist eine Trommelbremse mit einem ausweichfähig gelagerten Spreiznocken bekannt, der jedoch im Zusammenhang mit einem Gespann konzipiert ist, das eine Auflaufbremseinrichtung sowie eine Anordnung aufweist, die bei Rückwärtsfahrt des Gespannes die Bremswirkung aufhebt.

Diese Anordnung bewirkt, dass die Bremsbacken nur bei Vorwärtsfahrt ortsfest abgestützt sind, bei Rückwärtsfahrt hingegen ausweichen können. Um diese Ausweichbewegung zu ermöglichen, ist auch der Spreiznocken ausweichfähig gelagert.

Im weiteren dient die Handbremse bei diesem Stand der Technik nur als Feststellbremse, während für die Betriebsbremse die Auflaufvorrichtung vorgesehen ist, die wesentlich höhere Zuspannkräfte als ein Handbremshebel erzeugt. Der Handbremshebel ist demgemäss auch am Anhänger angeordnet.

Aus der GB-PS 827 628 ist es für sich bekannt, das Verhältnis des Radius (R) der Bremsbackenbeläge zum Abstand (A) der Anschläge von der Radachse grösser als 1,5 zu wählen. Dabei handelt es sich aber um eine Servo-Bremse für Schnelläufer mit schwimmend gelagerten Anschlägen, bei der das vorgenannte Merkmal mithelfen soll, die Reibwertabhängigkeit des Bremsverhaltens zu verringern. Das Verhältnis R/A ist demgemäss variabel und von konstruktiven Vorgaben der Radbremse abhängig. Im weiteren steht das Verhältnis R/A im Zusammenhang mit einer besonders geregelten hydraulischen Zuspannung und dient zu einer Beeinflussung des Servo-Effektes. Änderungen des Reibwertes der Bremsbeläge sollen danach durch eine Änderung des Servo-Effektes ausgeglichen werden.

Die Erfindung wendet in einem Ausführungsbeispiel auch eine aus der DE-OS 2 814 538 bekannte Gestaltung des Spreiznockens an, indem dieser im Querschnitt, bezogen auf seine Drehachse, eine ovale und im radialen Längsschnitt, bezogen auf seine Drehachse eine ballige Form aufweist.

Es ist verständlich, dass die gestellte Aufgabe aus der Zusammenfassung von konstruktiven Änderungen an voneinander distanzierten Stellen besonders wirksam gelöst werden kann. So sieht die Erfindung beispielsweise vor, dass der Handbremshebel mit dem dessen Lager aufnehmenden Gestell über einen vorgespannten und über eine Totpunktstellung hinwegbewegbaren Huberzeuger, z.B. Gasfeder, gelenkig verbunden ist. Diese Anordnung hat die Wirkung, dass der Huberzeuger sich unterstützend auf die Handkraft beim Betätigen des Handbremshebels einwirkt, sobald eine Totpunktstellung überschritten worden ist. In Kombination mit den vorerwähnten Erfindungsmerkmalen ergibt sich eine nicht unwesentliche Steigerung der Bremsleistung im Sinne der erfindungsgemäss gestellten Aufgabe, wenngleich die Anordnung dieses Huberzeugers nicht unbedingt erforderlich ist.

Im Interesse der Vergrösserung des Verhältnisses des Radius des Bremsbelages der Bremsbacken zum Abstand der ortsfesten Anschläge von der Radachse kann es sich jedoch empfehlen, die Bremsbacken an ihren den Anschlägen zugekehrten Enden mit einem in Richtung zur Radachse vorspringenden Ansatz zur Anlage an den Anschlägen zu versehen. Diese Massnahme trägt dazu bei, den Ort der Anschläge ohne wesentliche Vergrösserung der Dimension der Bremsbacken näher in Richtung zur Radachse zu verlegen.

Einzelheiten der Erfindung sind in der Zeichnung schematisch und beispielsweise dargestellt. Es zeigen:

Fig. 1: eine schematische Seitenansicht einer Trommelbremse für einen Langsamläufer,

Fig. 2: eine Variante der Dastellung gemäss Fig. 1,

Fig. 3: einen Schnitt durch eine Radbremse mit Darstellung einer Spreiznocken- und Abstützanordnung und

Fig. 4: einen Teilschnitt durch eine Variante der Abstützanordnung gemäss Fig. 3.

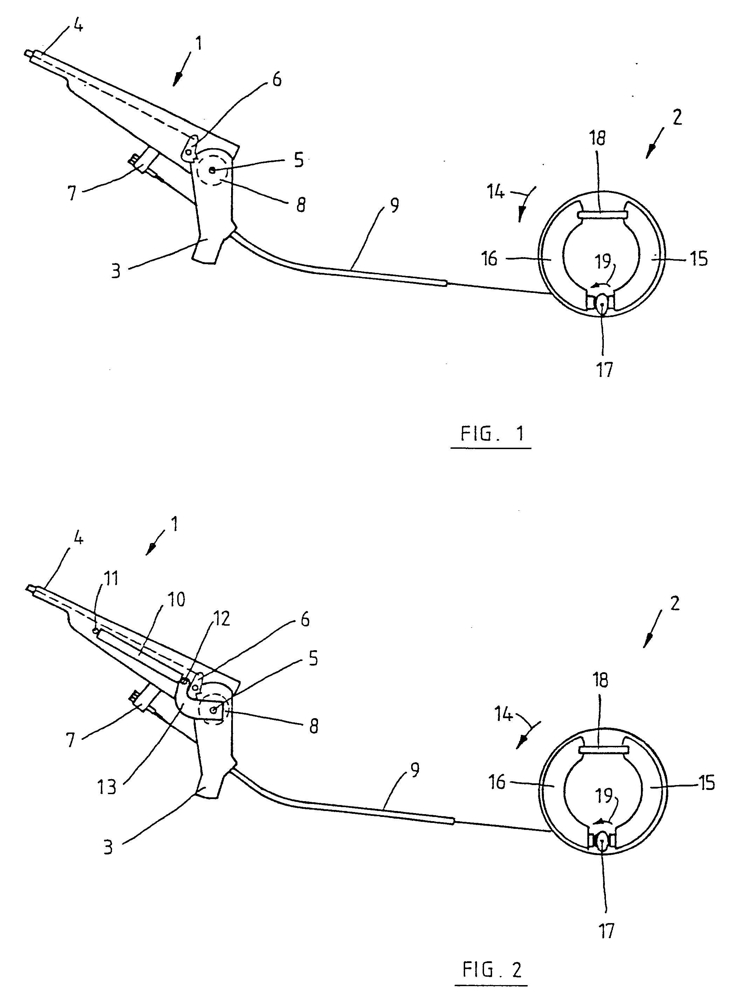

Im Ausführungsbeispiel der Fig. 1 ist eine Trommelbremse mit einer Handbremse 1 gezeigt, die über einen Bowdenzug 9 mit einer Radbremse 2 verbunden ist.

Die Handbremse 1 befindet sich an einem Zugfahrzeug, beispielsweise Traktor. Die Radbremse 2 befindet sich an einem als Langsamläufer zugelassenen Anhänger, beispielsweise Ladewagen für landwirtschaftliche Zwecke.

Die Handbremse 1 weist in üblicher Weise einen Handbremshebel 4 auf, der um das Schwenklager 5 bewegbar ist und über einen Ansatz 7 den Bowdenzug 9 betätigt. Mit Hilfe einer Sperrklinke 6 kann der Handbremshebel in der angezogenen Stellung gegenüber dem Gestell 3, das eine passende Verzahnung aufweist, festgestellt werden. Der Bowdenzug 9 kann lösbar mit dem Handbremshebel 4 verbunden sein.

Der Bowdenzug 9 wirkt auf einen nicht dargestellten Hebel, der im Bereiche der Radbremse 2 einen Spreiznocken 17 in Richtung des Pfeiles 19 verschwenkt. Mit dem Pfeil 14 ist die Vorwärtsfahrt-Drehrichtung des Anhängerrades bezeichnet. Es zeigt sich, dass beide Drehrichtungen 14, 19 gleichsinnig sind. Durch die Verdrehung des Spreiznockens 17 werden die Primärbacke 15 und die Sekundärbacke 16 gegen die nicht bezeichnete Bremstrommel angedrückt. Beide Bremsbacken 15, 16 stützen sich an einem ortsfesten Anschlag 18 ab. Dieser ortsfeste Anschlag 18 soll so nahe wie möglich an der Radachse liegen. Je näher dieser Anschlag 18 an der Radachse liegt, desto grösser ist die Reibkraft der Bremsbacken 15, 16 an der Radtrommel.

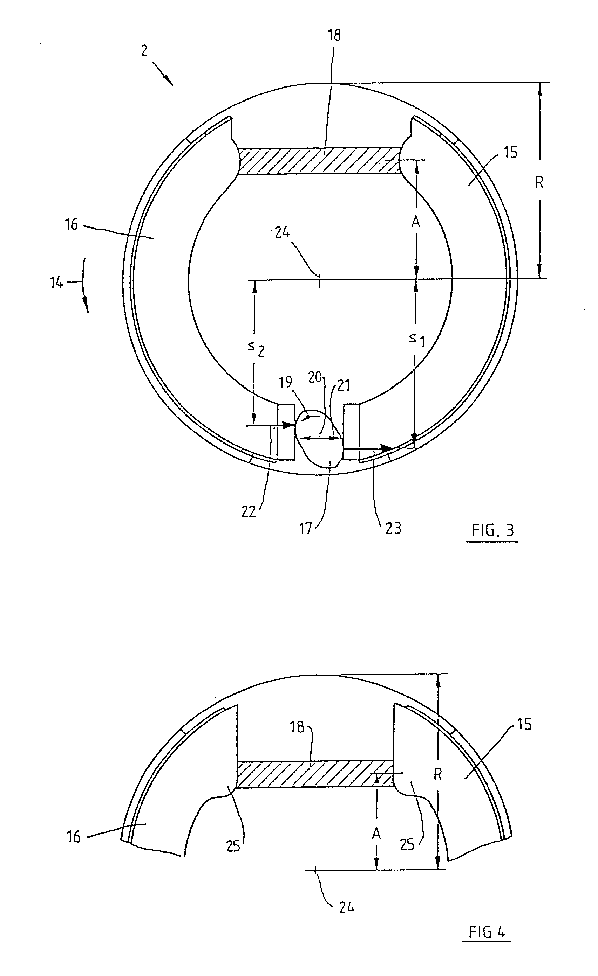

Die spezielle Wirkungsweise dieser Zusammenhänge ist in der Fig. 3 näher dargestellt. Während beim Ausführungsbeispiel der Fig. 1 die Längsachse des Spreiznockens 17 in seiner Grundstellung radial, bezogen auf die Radachse, sich erstreckt, ist beim Ausführungsbeispiel der Fig. 3 der Spreiznocken 17 in seiner Grundstellung gegenüber dieser Radialen im spitzen Winkel geneigt. Dies führt dazu, dass der Spreiznocken an der ablaufenden Bremsbacke 16 (Sekundärbacke) mit einem Abstand $S_2$ und am Primärbacken 15 mit einem grösseren Abstand $S_1$ angreift. Die Drehachse 20 des Spreiznockens 17 bzw. die Spreiznockenwelle ist ausweichfähig gelagert. Mit 21 ist symbolisch der Ausweichweg dargestellt. Ausserdem empfiehlt es sich, den Spreiznocken 17 im Querschnitt, bezogen auf seine Drehachse 20, oval und im radialen Längsschnitt, bezogen auf seine Drehachse 20, ballig auszubilden. Nähere Einzelheiten über eine solche Gestaltung können der DE-OS 2 814 538 entnommen werden.

In Fig. 3 ist ferner dargestellt, dass der ortsfeste Anschlag 18 einen Abstand A von der Radachse 24 besitzt, der mit dem Radius R der Reibbeläge der Bremsbacken 15, 16 in Bezug gesetzt wird.

Wie bereits unter Fig. 1 beschrieben, führt das Anziehen des Handbremshebels 4 zu einer Drehbewegung des Spreiznockens 17 entsprechend dem Pfeil 19. Beide Bremsbacken 15, 16, die sich am Anschlag 18 abstützen, werden gegen die Bremstrommel gespreizt. Da nun die Bremsbacken 15, 16 wegen des Anschlages 18 nicht ausweichen können, führt die Verdrehung des Spreiznockens 17 zu einer Abstützung des Sekundärbackens 16 am Anschlag 18, wobei sich die Stützkraft 22 aus dieser Abstützung als Widerstand darstellt, der den Spreiznocken 17 in die Lage versetzt, bei Fortsetzung der Spreizbewegung sich am Sekundärbacken 16 abzustützen und eine Zusatzkraft (ausser der Spreizkraft) auf den Primärbacken 15 auszuüben. Diese überlagerte Spreizkraft ist mit dem Pfeil 23 dargestellt. Sie greift so weit wie möglich im peripheren Bereich der Primärbacke 15 an.

Aus dem Zusammenwirken des ausweichfähig gestalteten Spreiznockens 17 mit einem Kraftverstärkungseffekt, wie er durch die Pfeile 22, 23 dargestellt ist und in Verbindung mit dem Anschlag 18, dessen Abstand A zur Radachse 24 so gering wie möglich sein soll, ergibt sich eine wesentlich grössere Bremswirkung, als dies bisher mit Handbremseinrichtungen bekannter Bauart möglich war. In der Praxis hat sich als besonders vorteilhaft erwiesen, wenn das Verhältnis R:A mindestens 1,5 ist.

In Fig. 4 ist eine vorteilhafte Ausgestaltung gezeigt, wonach beide Bremsbacken 14, 15 in dem am Anschlag 18 anliegenden Bereich mit einem radial nach innen vorspringenden Ansatz 25 versehen sind. Mit dieser Ausbildung ist es möglich, die Bremsbacken 15, 16 im übrigen Bereich normal zu dimensionieren und dennoch einen geringen Abstand A von der Radachse 24 zu erreichen.

Eine zusätzliche Steigerung der Bremswirkung bei Betätigung des Handbremshebels 4 ist mit einer Anordnung gemäss Fig. 2 möglich, wonach zwischen dem Handbremshebel 4 und dem Gestell 3 ein Huberzeuger 10, beispielsweise eine Gasfeder, angeordnet ist. Dieser Huberzeuger 10 ist im Gelenk 11 am Handbremshebel 4 und im Gelenk 12 an einem Gestellteil 13 des Gestelles 3 gelagert. Die Gelenke 11, 12 des Huberzeugers 10 sind so gewählt, dass der Huberzeuger 10 beim ersten Bereich des Hebelweges 4 eine Erhöhung der Vorspannung des Huberzeugers 10 eintritt, bis eine Totpunktstellung überwunden ist. Nach Überwindung der Totpunktstellung wirkt sich die im Huberzeuger 10 vorhandene Vorspannung unterstützend zu der manuellen Kraft aus, die man zum Anziehen der Radbremse benötigt. Nähere Hinweise über die Gestaltung dieses Huberzeugers können der nachveröffentlichten DE-OS 3 033 582 entnommen werden.

Der Einsatz des erfindungsgemässen Gegenstandes hat zu ganz überraschenden Bremsergebnissen geführt. Während eine Trommelbremse der vorbekannten Bauart bei fabrikneuer Ausführung eine Abbremsung von nur 22% zu erzielen vermochte, konnte allein mit der Ausgestaltung gemäss Fig. 3 eine Abbremsung von über 30% und bei der Vereinigung aller mit der Erfindung offenbarter Mittel eine Abbremsung von 37% erzielt werden.

**Patentansprüche**

1. Trommelbremse für als Langsamläufer zugelassene Fahrzeuganhänger, insbesondere landwirtschaftliche Gespanne, mit einer als Betriebs- und Feststellbremse ausgebildeten, als alleiniges Betätigungsmittel wirkenden Handbremse (1), deren Handbremshebel (4) am Zugfahrzeug angebracht ist und über ein Gestänge oder einen Bowdenzug (9) die Bremsbacken (15, 16) der Trommelbremse (2) über eine Spreiznockenanordnung (17, 20) betätigt, wobei sich die Bremsbacken (15, 16) in beiden Drehrichtungen der Trommel an oftsfesten Anschlägen (18) abstützen, dadurch gekennzeichnet, dass die Spreiznockenanordnung (17, 20) einen mit seiner Antriebswelle ausweichfähig gelagerten Spreiznocken (17) aufweist, dessen Spreizdrehrichtung (19) gleichsinnig mit der Raddrehrichtung (14) bei Vorwärtsfahrt gewählt ist und dass das Verhältnis des Radius (R) des Bremsbelages der Bremsbacken (15, 16) zum Abstand (A) der ortsfesten Anschläge (18) von der Radachse (24) grösser als 1,5 ist.

2. Trommelbremse nach Anspruch 1, dadurch gekennzeichnet, dass die Längsachse des Spreiznockens (17) in der ungespreizten Stellung in einem spitzen Winkel zu der durch die Radachse (24) führenden Radialen eingestellt ist, dergestalt, dass die der Radachse (24) näherliegende Angriffsfläche des Spreiznockens (17) der Sekundärbacke (16) zugekehrt ist.

3. Trommelbremse nach Anspruch 1 oder 2, dadurch gekennzeichnet, dass der Spreiznocken (17) im Querschnitt, bezogen auf seine Drehachse (20), eine ovale um im radialen Längsschnitt, bezogen auf seine Drehachse eine ballige Form aufweist.

4. Trommelbremse nach Anspruch 1 oder einem der folgenden, dadurch gekennzeichnet, dass die Bremsbacken (15, 16) an ihren den Anschlägen (18) zugekehrten Enden einen in Richtung zur Radachse (24) vorspringenden Ansatz (25) zur Anlage an den Anschlägen (18) aufweisen.

5. Trommelbremse nach Anspruch 1 oder einem der folgenden, dadurch gekennzeichnet, dass der Handbremshebel (4) mit dem dessen Lager (5) aufnehmenden Gestell (3, 13) über einen vorgespannten und über eine Totpunktstellung hinwegbewegbaren Huberzeuger (10), z.B. Gasfeder, gelenkig (11, 12) verbunden ist.

**Claims**

1. Drum brake for vehicle trailers registered as slow moving vehicles, in particular agricultural attachments, with a hand brake (1) designed as a service brake and a parking brake and acting as a single actuating means, and the hand brake lever (4) of which is arranged on the traction vehicle and actuates, via a rod structure or a Bowden cable (9) the brake shoes (15, 16) of the drum brake (2) by means of an expanding cam arrangement (17, 20), the brake shoes (15, 16) being supported in both directions of rotation of the drum on fixed stops (18), characterised in that the expanding cam arrangement (17, 20) has an expanding cam (17) which is mounted so that its drive shaft can be deflected, and the expanding direction of rotation (19) of the expanding cam (17) being selected to be in the same direction as the direction of rotation (14) of the wheel in the case of forward drive and that the ratio of the radius (R) of the brake lining of the brake shoes (15, 16) to the distance (A) of the fixed stops (18) of the wheel axle (24) is greater than 1.5.

2. Drum brake according to claim 1, characterised in that the longitudinal axis of the expanding cam (17) is set in the non-expanded position at an acute angle to the radial which passes through the wheel axis (24) in such a way that the engagement surface of the expanding cam (17) which is closer to the wheel axis (24) is turned towards the secondary shoe (16).

3. Drum brake according to claim 1 or 2, characterised in that the expanding cam (17) in section, relative to its axis of rotation (20), has an oval shape in radial longitudinal section and a spherical shape relative to its axis of rotation.

4. Drum brake according to claim 1 or any one of the following claims, characterised in that the brake shoes (15, 16) at their ends which are turned towards the stops (18) have a projection (25) which extends in the direction of the wheel axis (24) of rotation to abut against the stops (18).

5. Drum brake according to claim 1 or any one of the following claims, characterised in that the hand brake lever (4) is connected in an articulated manner (11, 12) to a frame (3, 13) which receives the bearing (5) of the said hand brake lever (4) by means of a prestressed piston (10), e.g. a gas-actuated spring, which can move across dead-centre position.

**Revendications**

1. Frein à tambour pour une remorque de véhicule agréée pour le déplacement à faible vitesse, notamment pour attelages agricoles, comportant un frein à main (1) conçu à la manière d'un frein de service et de blocage et agissant en tant que seul moyen d'actionnement, et dont le levier (4) est monté sur le véhicule tracteur et actionne, au moyen d'une tringlerie ou d'un câble Bowden (9), les mâchoires de frein (15, 16) du frein à tambour (2) par l'intermédiaire d'un dispositif à came d'écartement (17, 20), les mâchoires de frein (15,16) prenant appui, pour les deux sens de rotation du tambour, contre les butées fixes (18), caractérisé par le fait que le dispositif à came d'écartement (17, 20) comporte une came d'écartement (17) montée de manière à pouvoir céder élastiquement au niveau de son arbre d'entraînement et dont le sens de rotation correspondant à l'écartement (19) est choisi pour être identique au sens de rotation (14) des roues lors du déplacement vers l'avant, et que le rapport entre le rayon (R) de la garniture de frein des mâchoires de frein (15, 16) et la distance (A) séparant les butées fixes (18) de l'axe (24) de la roue est supérieur à 1,5.

2. Frein à tambour suivant la revendication 1, caractérisée par le fait que dans la position non écartée, l'axe longitudinal de la came d'écartement (17) est ajusté de manière à faire un angle aigu par rapport à la direction radiale passant par l'axe (24) de la roue, de telle sorte que la surface d'attaque de la came d'écartement (17), qui est la plus proche de l'axe (24) de la roue, est tournée vers la mâchoire secondaire (16).

3. Frein à tambour suivant la revendication 1 ou 2, caractérisé par le fait que la came d'écartement (17) possède en coupe transversale, rapportée à son axe de rotation (20), une forme ovale et, en coupe longitudinale radiale, rapportée à son axe de rotation une forme convexe.

4. Frein à tambour suivant la revendication 1 ou l'une des suivantes, caractérisé par le fait que les mâchoires de frein (15, 16) comportent, sur leurs extrémités tournées vers les butées (18), une partie (25) saillant en direction de l'axe (24) de la roue et destinée à s'appliquer contre les butées (18).

5. Frein à tambour suivant la revendication 1 ou l'une des suivantes, caractérisé par le fait que le levier (4) du frein à main est relié au châssis (3, 13) portant le palier (5) de ce levier, de façon articulée (11, 12), par l'intermédiaire d'un dispositif générateur de course (10) placé sous précontrainte et pouvant être déplacé au-delà d'une position de point mort, par exemple un ressort pneumatique.

FIG. 1

FIG. 2

FIG. 3

FIG 4